# EUROPEAN PATENT APPLICATION

(11) **EP 4 682 273 A1**
(43) Date of publication of application: **21.01.2026**
(21) Application number: 24779288.0
(22) Date of filing: 08.03.2024
(51) Int. Cl.: C21D 11/00, C21D 9/56, C22C 38/00, C22C 38/04

(54) **STEEL-STRIP PLATE TEMPERATURE PREDICTION METHOD, STEEL- STRIP PLATE TEMPERATURE CONTROL METHOD, STEEL-STRIP MANUFACTURING METHOD, AND METHOD FOR GENERATING STEEL -STRIP PLATE TEMPERATURE PREDICTION MODEL**

(30) Priority: 29.03.2023 JP 2023053615
(71) Applicant: JFE Steel Corporation, Tokyo 100-0011 (JP)
(72) Inventor: YOSHIMOTO Soshi, Tokyo 100-0011 (JP)
(74) Representative: Haseltine Lake Kempner LLP
(86) International application number: PCT/JP2024/008977
(87) International publication number: WO 2024/203155

(57) **Abstract**

Proposed are a method for predicting the sheet temperature of a steel strip, a method for controlling the sheet temperature of a steel strip, a steel strip production method, and a method for generating a steel strip sheet temperature prediction model, each capable of controlling, with high accuracy, the annealing temperature for a steel strip to be an annealing temperature favorable for the magnetic properties to be obtained, and thus allowing the steel strip to obtain stable and excellent magnetic properties. The method for predicting the sheet temperature of a steel strip includes an input data acquisition step of acquiring, as input data for a steel strip sheet temperature prediction model, operation data, an attribute parameter related to the dimensions of the steel strip, an attribute parameter related to the composition of components of the steel strip, and an attribute parameter related to the shape of the steel strip; and a sheet temperature prediction step of inputting, to the sheet temperature prediction model, the operation data, the attribute parameter related to the dimensions of the steel strip, the attribute parameter related to the composition of components of the steel strip, and the attribute parameter related to the shape of the steel strip that have been acquired in the input data acquisition step, thereby causing the model to output the sheet temperature of the steel strip on the outlet side of the soaking zone.

## Description

### Technical Field

The present invention relates to a method for predicting the sheet temperature of a steel strip (a hot-rolled steel strip) in an annealing step for a steel strip that has been subjected to hot rolling, a method for controlling the sheet temperature of a steel strip, a steel strip production method, and a method for generating a steel strip sheet temperature prediction model.

In particular, the present invention relates to an annealing method for a hot-rolled steel strip for an electrical steel sheet that contains 1.6 to 5.0 mass% of Si.

### Background Art

It is known that applying heat treatment to a hot-rolled steel strip for an electrical steel sheet that contains 1.6 to 5.0 mass% of Si prior to cold rolling can result in a product sheet with excellent magnetic properties, that is, highly developed Goss orientation. A hot strip annealing equipment typically includes a preheating zone, a heating zone, a soaking zone, and a cooling zone to execute an annealing step. The sheet temperature of a steel strip on the outlet side of the soaking zone has great influence on the magnetic properties of the resulting product sheet.

Various methods have been proposed so far to control the sheet temperature of a steel strip on the outlet side of the soaking zone in such a hot strip annealing equipment.

For example, Patent Literature 1 discloses a technology for rapidly heating a steel strip during hot strip annealing.

Patent Literature 2 discloses a technology related to the cooling rate when a steel strip is cooled following heating during hot strip annealing.

### Citation List

### Patent Literature

Patent Literature 1: JP-2018-066040A
Patent Literature 2: JP-2016-000856A

### Summary of Invention

### Technical Problem

However, the method described in Patent Literature 1 involves rapid heating during hot strip annealing as a means to improve the descaling property afterwards, with no suggestion that the annealing temperature should be precisely controlled during the rapid heating. Patent Literature 2 discloses a method of improving the microstructure of a hot-rolled sheet for a grain-oriented electrical steel sheet by applying hot strip annealing, but does not suggest controlling the annealing temperature with great accuracy during heating.

As described above, precisely controlling the heating temperature during hot strip annealing is critical for the production of an electrical steel sheet, from the perspective of improving magnetic properties.

However, due to the characteristics of a hot-rolled steel strip, such as large thickness, low thickness accuracy, and large variation in the thickness, the temperature in an annealing furnace varies accordingly. Thus, there have been limitations on the high-accuracy control of the heating temperature for a steel strip.

To solve the above problems associated with the conventional technologies, the present invention aims to propose a method for predicting the sheet temperature of a steel strip, a method for controlling the sheet temperature of a steel strip, a steel strip production method, and a method for generating a steel strip sheet temperature prediction model, with precise control of the annealing temperature for a steel strip to achieve a temperature favorable to magnetic properties, thereby enabling the steel strip to attain stable and excellent magnetic properties.

Hereinafter, the downstream side of a flow of a steel strip in an annealing equipment, around the outer side of a soaking zone therein, shall be referred to as the "outlet side of the soaking zone."

### Solution to Problem

The inventors conducted concentrated studies on an annealing method for a hot-rolled steel strip that can control the steel strip temperature on the outlet side of a soaking zone with high accuracy during hot strip annealing.

Consequently, the inventors developed a steel strip temperature (i.e., sheet temperature) prediction model through machine learning during annealing after hot rolling of the steel strip. Using this prediction model, the inventors predicted the sheet temperature on the outlet side of the soaking zone in an annealing step and actually applied the heating temperature to annealing as a production condition. Then, the inventors discovered that it was possible to suppress variation in the steel strip temperature (i.e., sheet temperature) on the outlet side of the soaking zone and precisely control the annealing temperature to a target value.

A method for predicting the sheet temperature of a steel strip according to the present invention that advantageously solves the foregoing problems has the following features.
[1] A method for predicting a sheet temperature of a steel strip on an outlet side of a soaking zone in an annealing step for the steel strip using a hot strip annealing equipment, includes:
   an input data acquisition step of acquiring, as input data to be used in a steel strip sheet temperature prediction model generated in advance,
      one or more parameters selected from among operation parameters of the hot strip annealing equipment and set as operating conditions for a steel strip production step,
      one or more parameters selected from among attribute parameters related to the dimensions of the steel strip,
      one or more parameters selected from among attribute parameters related to the component composition of the steel strip, and
      one or more parameters selected from among attribute parameters related to the shape of the steel strip; and
   a sheet temperature prediction step of inputting, to the sheet temperature prediction model,
      the one or more pieces of operation data,
      the one or more attribute parameters related to the dimensions of the steel strip,
      the one or more attribute parameters related to the component composition of the steel strip, and
      the one or more attribute parameters related to the shape of the steel strip that were acquired in the input data acquisition step, and thereby outputting the sheet temperature of the steel strip on the outlet side of the soaking zone.
[2] The method for predicting a sheet temperature of a steel strip according to [1] above, in which
   the sheet temperature prediction model is generated through the following steps:
      a learning data acquisition step of acquiring a plurality of pieces of learning data by using, as input data,
         one or more pieces of operation track record data selected from among pieces of track record data on an operation of the hot strip annealing equipment,
         one or more parameters selected from among attribute parameters related to the dimensions of steel strips,
         one or more parameters selected from among attribute parameters related to the component compositions of steel strips, and
         one or more parameters selected from among attribute parameters related to the shapes of steel strips,
      and by using, as output data, information obtained based on the input data, the information being related to the sheet temperatures of steel strips on the outlet side of the soaking zone in the annealing step; and
   a sheet temperature prediction model generation step of generating the sheet temperature prediction model through machine learning using the plurality of pieces of learning data acquired in the learning data acquisition step.
[3] The method for predicting a sheet temperature according to [2] above, in which a method selected from among a neural network, decision tree learning, random forests, and support vector regression is used for the machine learning.

A method for controlling a sheet temperature of a steel strip according to the present invention that advantageously solves the foregoing problems, and a steel strip production method that involves the use of the sheet temperature control method has the following features.

[4] A method for controlling a sheet temperature of a steel strip, including a step of, using the method for predicting a sheet temperature of a steel strip according to any one of [1] to [3] above, predicting the sheet temperature of the steel strip on the outlet side of the soaking zone in the annealing step, comparing the predicted sheet temperature of the steel strip with a preset target temperature, and resetting the one or more operation parameters selected from among the operation parameters of the hot strip annealing equipment so as to allow a difference between the compared temperatures to fall within a predetermined temperature range.

[5] A steel strip production method including a step of annealing a hot-rolled sheet using the method for controlling a sheet temperature of a steel strip according to [4] above.

A method for generating a steel strip sheet temperature prediction model according to the present invention that advantageously solves the foregoing problems has the following features.

[6] A method for generating a steel strip sheet temperature prediction model, the method being used to generate a sheet temperature prediction model for predicting a sheet temperature of a steel strip on an outlet side of a soaking zone in an annealing step in a hot strip annealing equipment, including:
a learning data acquisition step of acquiring a plurality of pieces of learning data by using, as input data,
   one or more pieces of operation track record data selected from among pieces of track record data on an operation of the hot strip annealing equipment,
   one or more parameters selected from among attribute parameters related to dimensions of steel strips,
   one or more parameters selected from among attribute parameters related to component compositions of steel strips, and
   one or more parameters selected from among attribute parameters related to shapes of steel strips, and
by using, as output data, information obtained based on the input data and related to sheet temperatures of steel strips on the outlet side of the soaking zone in the annealing step; and
a sheet temperature prediction model generation step of generating a sheet temperature prediction model through machine learning using the plurality of pieces of learning data generated in the learning data acquisition step,
the sheet temperature prediction model being adapted to receive, as input data, operation data, an attribute parameter related to the dimensions of the steel strip, an attribute parameter related to a component composition of the steel strip, and an attribute parameter related to a shape of the steel strip, and provide, as output data, a sheet temperature of the steel strip on the outlet side of the soaking zone.

[7] The method for generating a steel strip sheet temperature prediction model according to [6] above, in which a method selected from among a neural network, decision tree learning, random forests, and support vector regression is used for the machine learning.

### Advantageous Effects of Invention

The present invention can predict the sheet temperature of a hot-rolled steel strip on the outlet side of a soaking zone in a hot strip annealing equipment, which applies heat treatment prior to cold rolling, with a sheet temperature prediction method using a sheet temperature prediction model, enabling the steel strip temperature on the outlet side of the soaking zone to be controlled with high accuracy to a predetermined target temperature. This reduces variation in the sheet temperature of the steel strip on the outlet side of the soaking zone in the hot strip annealing equipment and thus stably improves the magnetic properties of the resulting product sheet while suppressing the occurrence of failures in the magnetic properties.

### Brief Description of Drawings

[Fig. 1] Fig. 1 is a schematic view illustrating an example of a hot strip annealing equipment used for the annealing of a hot-rolled steel strip of the present invention.
[Fig. 2] Fig. 2 is a graph illustrating an example of a heat history of a hot-rolled steel strip during the annealing of the steel strip of the present invention.
[Fig. 3] Fig. 3 is an explanatory view illustrating a method for generating a model for predicting the sheet temperature on the outlet side of a soaking zone.
[Fig. 4] Fig. 4 is an explanatory view illustrating a method for predicting the sheet temperature and a method for controlling the sheet temperature on the outlet side of the soaking zone.

### Description of Embodiments

Described below are a method for predicting the sheet temperature of a steel strip in an annealing step for a hot-rolled steel strip according to an embodiment of the present invention, a method for controlling the sheet temperature of a steel strip, and a steel strip production method.

The method for predicting the sheet temperature of a steel strip according to the present embodiment predicts the sheet temperature on the outlet side of a soaking zone in a hot strip annealing equipment, which performs heat treatment prior to cold rolling on the steel strip that has undergone hot rolling.

In steps following at least a hot-rolling step, a thin steel sheet is wound into a coil before being subjected to heat treatment and other processes. Thus, such a thin steel sheet is described as a "steel strip" in the present embodiment.

Hereinafter, the present embodiment will be specifically described with reference to the drawings.

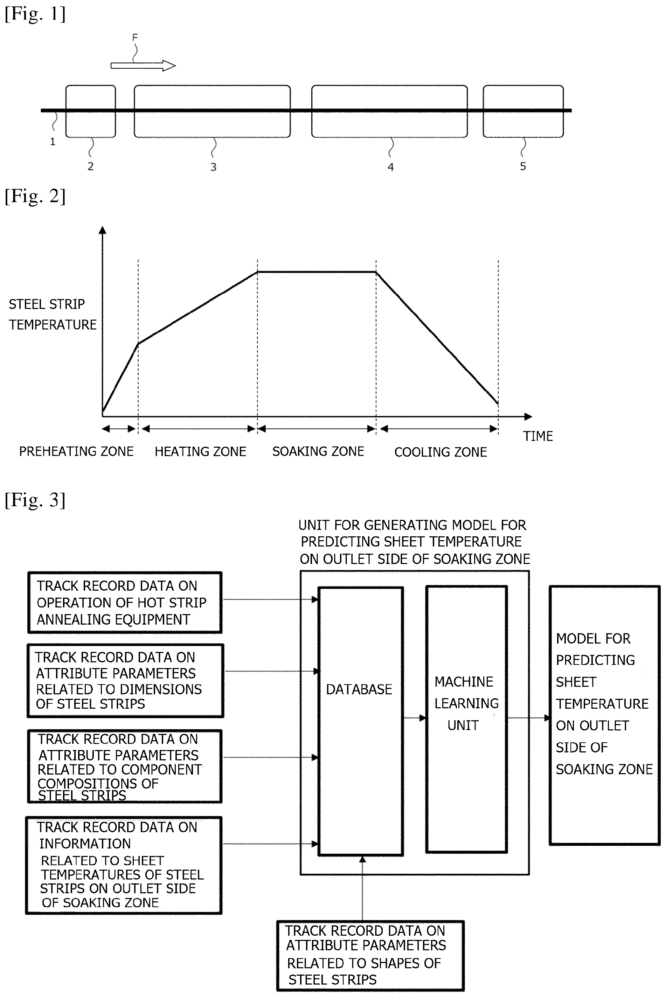

Fig. 1 illustrates a hot strip annealing equipment according to the present embodiment, in which heat treatment is applied to a hot-rolled steel strip for an electrical steel sheet prior to cold rolling. An arrow F in Fig. 1 indicates the direction of travel along the line. The hot strip annealing equipment is roughly divided into a preheating zone 2, a heating zone 3, a soaking zone 4, and a cooling zone 5.

The annealing step involves heating a steel strip 1 from around the room temperature, holding it at a predetermined temperature, and then cooling it down to around the room temperature. In the hot strip annealing equipment illustrated in Fig. 1, the annealing step is executed through the preheating zone 2, the heating zone 3, the soaking zone 4, and the cooling zone 5.

Each of the preheating zone 2 and the heating zone 3 is a facility for heating the steel strip 1 to a preset temperature. In the preheating zone 2, an induction heating apparatus or a direct-fire or radiation-type combustion burner is used. In the heating zone 3, a direct-fire or radiation-type combustion burner is used. These heating apparatuses have a high heating capacity and a quick response. Thus, a heating history can be easily changed in response to a change in the heating cycle. The soaking zone 4 holds the steel strip 1 at a predetermined temperature, with such a heating capacity that heat to be radiated from the furnace body and the like is supplemented.

The cooling zone 5 cools the steel strip 1 to a predetermined temperature using, for example, gas jet cooling as a cooling method. The gas jet cooling is a cooling method involving blowing a gas to the surface of the steel strip 1 through a nozzle.

Thermometers for measuring the surface temperature of the steel strip 1 are disposed at a plurality of positions in the preheating zone 2, the heating zone 3, the soaking zone 4, and the cooling zone 5. In particular, thermometers are disposed on the inlet side and the outlet side of each of the preheating zone 2 and the heating zone 3, where the steel strip 1 exhibits a significant temperature change, so that the surface temperature of the steel strip 1 at the positions is measured, enabling the track record of the heating rate in each of the preheating zone 2 and the heating zone 3 to be calculated.

As the thermometers, radiation thermometers that continuously measure the surface temperature of the central portion of the steel strip 1 in the sheet width direction are used. However, these thermometers are not limited to radiation thermometers; profile radiation thermometers that measure a temperature distribution in the sheet width direction can also be used. In addition to measuring the surface temperature of the steel strip 1, thermometers for measuring the atmosphere temperature in the furnace are disposed in each zone for an annealing step. The measured surface temperature of the steel strip 1 and atmosphere temperature are output to a process computer that integrally controls the operation of the hot strip annealing equipment.

Fig. 2 is a graph showing a heat history of the steel strip 1 in the hot strip annealing equipment, which applies heat treatment to a hot-rolled steel strip for an electrical steel sheet prior to cold rolling. The abscissa axis indicates time, and the ordinate axis indicates the steel strip temperature. The steel strip temperature is the surface temperature of the steel strip 1, for example. The annealing step is performed through the preheating zone 2, the heating zone 3, the soaking zone 4 and the cooling zone 5. The conveyance speed of the steel strip 1 during the annealing step is maintained constant to prevent variation in the sheet temperature at different positions in the longitudinal direction of the steel strip 1. However, if the steel strip 1 is formed by welding and has variations in sheet thickness, sheet width, steel grade, etc., the line speed may vary at positions before and after the weld. Therefore, the shape of the graph of the heat history may differ depending on the position where the temperature of the steel strip 1 is measured.

### <Method for generating steel strip sheet temperature prediction model>

Fig. 3 illustrates a method for generating a model for predicting the sheet temperature of a steel strip on the outlet side of the soaking zone according to the present embodiment.

Track record data on the operation of the hot strip annealing equipment, track record data on attribute parameters related to the dimensions of steel strips, track record data on attribute parameters related to the component compositions of steel strips, track record data on attribute parameters related to the shapes of steel strips, and track record data on information related to the sheet temperatures of steel strips on the outlet side of the soaking zone are stored in a database.

The details of the track record data on the operation of the hot strip annealing equipment will be described later. Herein, track record data is selected from among pieces of operation track record data held by the process computer, which integrally controls the operation of the hot strip annealing equipment, and sent to a database of a unit of generating a model for predicting the sheet temperature on the outlet side of the soaking zone. Then, the track record data on the operation of the hot strip annealing equipment is associated with the corresponding coil number, for example, and these are stored as a dataset in the database. As the dataset stored in the database at this time, one dataset is acquired for one steel strip.

The database includes one or more parameters selected from among attribute parameters related to the dimensions of steel strips, such as the sheet thicknesses, sheet widths, and lengths. Track record data on an attribute parameter related to the dimensions of steel strips is stored, as a track record value for a hot-rolling step, in the process computer or a host computer together with the corresponding coil number, and is then sent to the database as appropriate to form a dataset. This is because including the attribute parameter related to the dimensions of steel strips as inputs enables the model for predicting the sheet temperature on the outlet side of the soaking zone to be widely applied to steel strips with different dimensions.

The database also includes one or more parameters selected from among attribute parameters related to the component compositions of steel strips. Track record data on an attribute parameter related to the component compositions of steel strips is stored, as a track record value for a steelmaking step, in the process computer or the host computer together with the corresponding coil number and is then sent to the database as appropriate to form a dataset. This is because including the attribute parameter related to the component compositions of steel strips as inputs enables the model for predicting the sheet temperature on the outlet side of the soaking zone to be widely applied to steel strips with different component compositions.

The database also includes one or more parameters selected from among attribute parameters related to the shapes of steel strips. Track record data on an attribute parameter related to the shapes of steel strips is stored, as a track record value for the hot-rolling step, in the process computer or the host computer together with the corresponding coil number, and is then sent to the database as appropriate to form a dataset. This is because including the attribute parameter related to the shapes of steel strips as inputs enables the model for predicting the sheet temperature on the outlet side of the soaking zone to be widely applied to steel strips with different shapes.

The number of datasets for the database used to generate the model for predicting the sheet temperature on the outlet side of the soaking zone of the present embodiment is preferably 200, and more preferably, 1,000 or more.

In the present embodiment, the model for predicting the sheet temperature of a steel strip on the outlet side of the soaking zone is generated through machine learning, using input data obtained by using the database created in the foregoing manner. The input data includes one or more pieces of operation track record data selected from among pieces of track record data on the operation of the hot strip annealing equipment, one or more parameters selected from among pieces of attribute parameter information related to the dimensions of steel strips, one or more parameters selected from among pieces of attribute parameter information related to the component compositions of steel strips, and one or more parameters selected from among pieces of attribute parameter information related to the shapes of steel strips.

A known learning method may be applied as the machine learning method. The type of the machine learning model is not limited as long as it can achieve a practically sufficient level of prediction accuracy of the sheet temperature of a steel strip on the outlet side of the soaking zone. For example, a known machine learning method, such as a neural network, may be used. Examples of the other methods can include decision tree learning, random forests, support vector regression, and a Gaussian process.

Alternatively, an ensemble model that combines a plurality of models may be used. Further, the model for predicting the sheet temperature on the outlet side of the soaking zone may be updated as appropriate using the latest learning data. This is to respond to long-term changes in the operating conditions of the hot strip annealing equipment.

### [Operation parameters of hot strip annealing equipment]

As the operation parameters of the hot strip annealing equipment, any operation parameter that has influence on the sheet temperature of a steel strip on the outlet side of the soaking zone can be used.

When using the example of the heating history of the steel strip in the annealing step illustrated in Fig. 2, the following operation parameters may be used for the annealing step. For example, the time during which the steel strip 1 passes through the preheating zone 2 and the amount of temperature increase may be used as the operation parameters of the preheating zone 2, or the average heating rate calculated from such values may be used. The time during which the steel strip 1 passes through the heating zone 3 and the amount of temperature increase may be used as the operation parameters of the heating zone 3, or the average heating rate calculated from such values may be used. The time during which the steel strip 1 passes through the soaking zone 4 and the amount of temperature increase may be used as the operation parameters of the soaking zone 4, or the average heating rate calculated from such values may be used.

Such values are output to the process computer from the preheating zone 2, the heating zone 3, and the soaking zone 4 after being obtained through measurement.

At least one of the foregoing operation parameters of the annealing step is used as training data (learning data). However, the operation parameters are not limited thereto. It is possible to use, as the operation parameters, the control output values of the heating apparatuses in the preheating zone 2, the heating zone 3, and the soaking zone 4, and the flow rates of gases and air supplied to the preheating zone 2, the heating zone 3, and the soaking zone 4. This is because these operation parameters are used to control the temperature history of the steel strip 1 in the annealing step.

### [Attribute parameters related to dimensions of steel strip]

In the present embodiment, the input data for the model for predicting the sheet temperature on the outlet side of the soaking zone further includes one or more parameters selected from among attribute parameters related to the dimensions of a steel strip, such as the sheet thickness, sheet width, and length of the steel strip. This is because these parameters have influence on the heat transfer behavior in the hot strip annealing equipment, and thus have influence on the sheet temperature of the steel strip on the outlet side of the soaking zone even at the same atmosphere temperature within the furnace. Accordingly, it is possible to generate a sheet temperature prediction model for predicting the sheet temperatures of hot-rolled steel strips of various dimensions used for electrical steel sheets, on the outlet side of the soaking zone in heat treatment prior to cold rolling. This widens the range of applications of the model for predicting the sheet temperature on the outlet side of the soaking zone.

### [Attribute parameters related to component composition of steel strip]

In the present embodiment, the input data for the foregoing model for predicting the sheet temperature on the outlet side of the soaking zone further includes one or more parameters selected from among attribute parameters related to the component composition of a steel strip.

These parameters have influence on the heat transfer behavior in the hot strip annealing equipment and on the target steel temperature range on the outlet side of the soaking zone, and thus affect the sheet temperature of the steel strip on the outlet side of the soaking zone even at the same atmosphere temperature within the furnace, and further have influence on the model for predicting the sheet temperature on the outlet side of the soaking zone.

Accordingly, it is possible to generate a sheet temperature prediction model for predicting the sheet temperatures of hot-rolled steel strips of various component compositions used for electrical steel sheets, on the outlet side of the soaking zone in heat treatment prior to cold rolling. This widens the range of application of the model for predicting the sheet temperature on the outlet side of the soaking zone.

As the attribute parameters related to the component composition of a steel strip, the contents of C, Si, Mn, P, and S, which are chemical components contained in the steel strip, can be used. In addition, the attribute parameters related to the component composition of the steel strip may include the contents of Cu, Ni, Cr, Al, Nb, Ti, V, N, and B.

However, not all the components need to be used as the attribute parameters related to the component composition of the steel strip. It is preferable to select the component composition in accordance with the type of steel strip to be produced in the hot strip annealing equipment.

### [Attribute parameters related to shapes of steel strip]

In the present embodiment, the input data for the foregoing model for predicting the sheet temperature on the outlet side of the soaking zone further includes one or more parameters selected from among attribute parameters related to the shape of a steel strip, such as the steepness and the amounts of warp of the steel strip. This is because such parameters have influence on the heat transfer behavior in the hot strip annealing equipment, and thus have influence on the sheet temperature of the steel strip on the outlet side of the soaking zone even at the same atmosphere temperature within the furnace. In particular, the shape of the steel strip has large influence on the heat transfer behavior in the sheet width direction of the steel strip.

Accordingly, it is possible to generate a sheet temperature prediction model for predicting the sheet temperatures of hot-rolled steel strips of various shapes used for electrical steel sheets, on the outlet side of the soaking zone in heat treatment prior to cold rolling. This widens the range of application of the model for predicting the sheet temperature on the outlet side of the soaking zone.

### <Method for predicting sheet temperature of steel strip>

The sheet temperature of a steel strip on the outlet side of the soaking zone in the hot strip annealing equipment is predicted through the next steps.

### [Input data acquisition step]

First, one or more parameters selected from among operation parameters of the hot strip annealing equipment, which are set as the operating conditions for a steel strip production step, one or more parameters selected from among attribute parameters related to the dimensions of the steel strip, one or more parameters selected from among attribute parameters related to the of component composition of the steel strip, and one or more parameters selected from among attribute parameters related to the shape of the steel strip are acquired as the input data.

### [Sheet temperature prediction step]

Next, the one or more piece of operation data, the one or more attribute parameters related to the dimensions of the steel strip, the one or more attribute parameters related to the component composition of the steel strip, and the one or more attribute parameters related to the shape of the steel strip, which have been acquired in the input data acquisition step, are input to the sheet temperature prediction model. Then, the model outputs the sheet temperature of the steel strip on the outlet side of the soaking zone.

### <Method for controlling sheet temperature of steel strip>

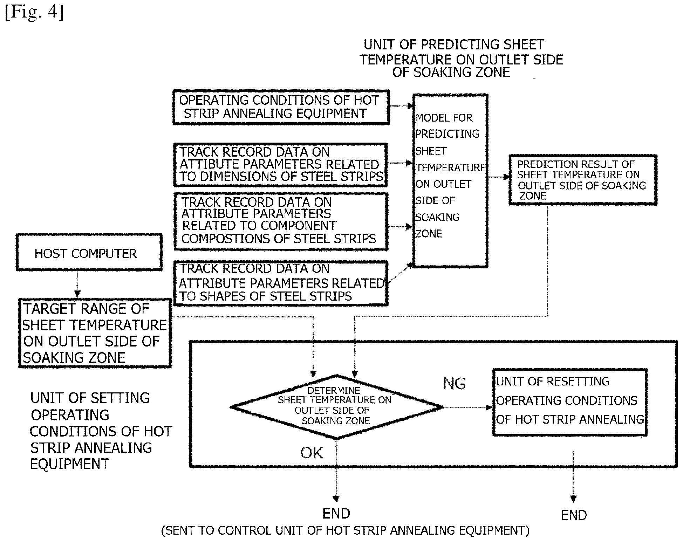

Fig. 4 illustrates a method for controlling the sheet temperature of a steel strip on the outlet side of the soaking zone and a steel strip production method, both of which use the foregoing method for predicting the sheet temperature on the outlet side of the soaking zone. The control flow shown in Fig. 4 is started once the leading end portion of the steel strip, which is a target of prediction of the sheet temperature on the outlet side of the soaking zone, has reached the outlet side of the soaking zone.

At this time point, for the steel strip that is the target of prediction of the sheet temperature on the outlet side of the soaking zone, track record data on the operation of the hot strip annealing equipment, which has been obtained from the hot strip annealing equipment, attribute parameter information related to the dimensions of the steel strip, attribute parameter information related to the component composition of the steel strip, and attribute parameter information related to the shape of the steel strip are used as the input data for the model for predicting the sheet temperature on the outlet side of the soaking zone. A step of acquiring such input data corresponds to the foregoing input data acquisition step.

Further, track record data on the operation of the hot strip annealing equipment at that time point or the set values of the operating conditions of the hot strip annealing equipment may be used as the input data for the model for predicting the sheet temperature on the outlet side of the soaking zone. The thus acquired data is input to the sheet temperature prediction model so that the sheet temperature of the steel strip on the outlet side of the soaking zone is predicted with the model.

In the present embodiment, the target range of the sheet temperature of the steel strip on the outlet side of the soaking zone is further set in a host computer, allowing for a comparison between the predicted sheet temperature on the outlet side of the soaking zone and the target range. Herein, the target range of the sheet temperatures on the outlet side of the soaking zone is set to achieve less variation than in the conventional technologies, based on the past operation track record related to the sheet temperatures of steel strips on the outlet side of the soaking zone. For example, the target range of the sheet temperature of a hot-rolled steel strip for an electrical steel sheet that contains 3.4 mass% of Si, on the outlet side of the soaking zone can be set to 1015 to 1025°C.

At this time, a unit of setting the operating conditions of the hot strip annealing equipment compares the target range of the sheet temperature on the outlet side of the soaking zone set in advance in the foregoing manner with the prediction result of the sheet temperature on the outlet side of the soaking zone. When the predicted sheet temperature on the outlet side of the soaking zone is within the target range, the default operating conditions of the hot strip annealing equipment are determined as they are, and are sent to a control unit of the hot strip annealing equipment. Meanwhile, if the predicted sheet temperature on the outlet side of the soaking zone is outside the target range, the operating conditions of the hot strip annealing equipment are reset.

Each of the unit of generating a model for predicting the sheet temperature on the outlet side of the soaking zone shown in Fig. 3, and the unit of predicting the sheet temperature on the outlet side of the soaking zone as well as the unit of setting the operating conditions of the hot strip annealing equipment shown in Fig. 4 may be implemented with the host computer and a computer that can communicate with various apparatuses forming the hot strip annealing equipment.

Such a computer may be a process computer, for example. The configuration of the computer is not limited to a particular one. For example, the computer may be the one including a memory (a storage apparatus), a CPU (a processing unit), a hard disk drive (HDD), a communication control unit for connection to a network, a display apparatus, and an input apparatus. Herein, various processes of the unit of generating a model for predicting the sheet temperature on the outlet side of the soaking zone, the unit of predicting the sheet temperature on the outlet side of the soaking zone, and the unit of setting the operating conditions of the hot strip annealing equipment may be executed with the CPU. The database in Fig. 3 may be implemented with the hard disk drive. In addition, the model for predicting the sheet temperature on the outlet side of the soaking zone may be stored in the memory. Further, collection of learning data may be implemented with the communication control unit.

Further, it is also possible to perform a steel strip production method including an annealing step for a hot-rolled sheet that involves the use of the foregoing method for controlling the sheet temperature of a steel strip.

### Example

Hereinafter, the present embodiment will be specifically described with reference to an Example, but the present invention is not limited thereto.

In the hot strip annealing equipment illustrated in Fig. 1, 200 coils of steel strips, each obtained by applying heat treatment prior to cold rolling to a hot-rolled steel strip for an electrical steel sheet, were produced. The input data used includes track record data on attribute information related to the dimensions of the steel strip loaded into the hot strip annealing equipment, track record data on attribute information related to the component composition of the steel strip loaded into the hot strip annealing equipment, track record data on attribute information related to the shape of the steel strip loaded into the hot strip annealing equipment, and operation track record data on the operation parameters of the hot strip annealing equipment.

A plurality of pieces of learning data were acquired based on the input track record data, using the sheet temperature on the outlet side of the soaking zone in the hot strip annealing equipment as the output data. Herein, the output data based on the input data refers to track record data output corresponding to a case where the input track record data is used as the operation setting conditions, for example (the obtained sheet temperature of the steel strip on the outlet side of the soaking zone). A model for predicting the sheet temperature on the outlet side of the soaking zone, which had been trained through machine learning using the acquired plurality of pieces of learning data, was generated with the method illustrated in Fig. 3.

To generate the model for predicting the sheet temperature on the outlet side of the soaking zone, the sheet thicknesses and sheet widths of steel strips were used as the attribute parameters related to the dimensions of the steel strips to be input. In addition, the contents of Si, Mn, and Al were input as the attribute parameters related to the component compositions of the steel strip. Further, steepness was input as the attribute parameters related to the shapes of the steel strips. Furthermore, the temperatures of the steel strips on the inlet side and the outlet side of the heating zone 3 as well as the conveyance speeds of the steel strips when the leading end portion passed through the heating zone 3 were input as the track record data on the operation of the hot strip annealing equipment.

Herein, the sheet temperature of each steel strip on the outlet side of the soaking zone, acquired as the learning data, was measured with a radiation thermometer on the outlet side of the soaking zone in the hot strip annealing equipment.

The thus generated model for predicting the sheet temperature on the outlet side of the soaking zone was applied to the unit of predicting the sheet temperature on the outlet side of the soaking zone to control the sheet temperature on the outlet side of the soaking zone shown in Fig. 4, to produce 100 coils of steel strips, each obtained by applying heat treatment prior to cold rolling to a hot-rolled steel strip for an electrical steel sheet.

At this time, the sheet temperature of the steel strip on the outlet side of the soaking zone in the hot strip annealing equipment was predicted as the output data, using the foregoing model for predicting the sheet temperature on the outlet side of the soaking zone, and the operation parameters of the hot strip annealing equipment were reset to allow the predicted sheet temperature on the outlet side of the soaking zone to be within the acceptable range (1015 to 1025°C) set in advance.

The flow shown in Fig. 4 is started once the leading end portion of the steel strip has reached the outlet side of the soaking zone. Sheet temperature data was measured on the outlet side of the soaking zone using the radiation thermometer on a plurality of steel strips. As a result, 95% of the steel strips had a sheet temperature in the acceptable range (1015 to 1025°C) on the outlet side of the soaking zone. Consequently, there was little variation among the magnetic properties of the resulting electrical steel sheets, and the magnetic properties were thus stable.

Meanwhile, similar experiments were conducted with the method described in Patent Literature 1 as a comparative example. Consequently, 65% of the steel strips had a sheet temperature in the acceptable range on the outlet side of the soaking zone.

In addition, similar experiments were conducted with the method described in Patent Literature 2 as a comparative example. Consequently, 50% of the steel strips had a sheet temperature in the acceptable range on the outlet side of the soaking zone.

Consequently, variation among the magnetic properties of the resulting electrical steel sheets of each of the comparative examples was larger than that of the example of the invention.

As described above, applying the method for predicting the sheet temperature on the outlet side of a soaking zone according to the present invention can predict the sheet temperature on the outlet side of a soaking zone in a hot strip annealing equipment with high accuracy, and can also reduce variation in the sheet temperature of a steel strip on the outlet side of the soaking zone, and thus can suppress variation in the magnetic properties of steel sheets.

### Industrial Applicability

The technology of the present invention is a technology for minimizing variation in the quality of product sheets by controlling the temperatures of steel strips on the outlet side of a soaking zone to a predetermined temperature with high accuracy using a sheet temperature prediction model. Such a technology is applicable to not only hot-rolled steel strips for electrical steel sheets but also all metal strips for which the annealing temperature needs to be controlled.

### Reference Signs List

- F: direction of travel of steel strip
- 1: steel strip
- 2: preheating zone
- 3: heating zone
- 4: soaking zone
- 5: cooling zone

## Claims

1. A method for predicting a sheet temperature of a steel strip on an outlet side of a soaking zone in an annealing step for the steel strip using a hot strip annealing equipment, comprising:
an input data acquisition step of acquiring, as input data to be used in a steel strip sheet temperature prediction model generated in advance,
one or more parameters selected from among operation parameters of the hot strip annealing equipment and set as operating conditions for a steel strip production step,
one or more parameters selected from among attribute parameters related to the dimensions of the steel strip,
one or more parameters selected from among attribute parameters related to the component composition of the steel strip, and
one or more parameters selected from among attribute parameters related to the shape of the steel strip; and
a sheet temperature prediction step of inputting, to the sheet temperature prediction model,
the one or more pieces of operation data,
the one or more attribute parameters related to the dimensions of the steel strip,
the one or more attribute parameters related to the component composition of the steel strip, and
the one or more attribute parameters related to the shape of the steel strip that were acquired in the input data acquisition step, and thereby outputting the sheet temperature of the steel strip on the outlet side of the soaking zone.

2. The method for predicting a sheet temperature of a steel strip according to claim 1, wherein the sheet temperature prediction model is generated through the following steps:
a learning data acquisition step of acquiring a plurality of pieces of learning data by using, as input data,
one or more pieces of operation track record data selected from among pieces of track record data on an operation of the hot strip annealing equipment,
one or more parameters selected from among attribute parameters related to the dimensions of steel strips,
one or more parameters selected from among attribute parameters related to the component compositions of steel strips, and
one or more parameters selected from among attribute parameters related to the shapes of steel strips,
and by using, as output data, information obtained based on the input data, the information being related to the sheet temperatures of steel strips on the outlet side of the soaking zone in the annealing step; and
a sheet temperature prediction model generation step of generating the sheet temperature prediction model through machine learning using the plurality of pieces of learning data acquired in the learning data acquisition step.

3. The method for predicting a sheet temperature of a steel strip according to claim 2, wherein
a method selected from among a neural network, decision tree learning, random forests, and support vector regression is used for the machine learning.

4. A method for controlling a sheet temperature of a steel strip, comprising a step of, with the method for predicting a sheet temperature of a steel strip according to any one of claims 1 to 3,
predicting the sheet temperature of the steel strip on the outlet side of the soaking zone in the annealing step,
comparing the predicted sheet temperature of the steel strip with a preset target temperature, and
resetting the one or more operation parameters selected from among the operation parameters of the hot strip annealing equipment so as to allow a difference between the compared temperatures to fall within a predetermined temperature range.

5. A steel strip production method comprising a step of annealing a hot-rolled sheet using the method for controlling the sheet temperature of the steel strip according to claim 4.

6. A method for generating a steel strip sheet temperature prediction model, the method being used to generate a sheet temperature prediction model for predicting a sheet temperature of a steel strip on an outlet side of a soaking zone in an annealing step in a hot strip annealing equipment, the method comprising:
a learning data acquisition step of acquiring a plurality of pieces of learning data by using, as input data,
one or more pieces of operation track record data selected from among pieces of track record data on an operation of the hot strip annealing equipment,
one or more parameters selected from among attribute parameters related to dimensions of steel strips,
one or more parameters selected from among attribute parameters related to component compositions of steel strips, and
one or more parameters selected from among attribute parameters related to shapes of steel strips, and
by using, as output data, information obtained based on the input data and related to sheet temperatures of steel strips on the outlet side of the soaking zone in the annealing step; and
a sheet temperature prediction model generation step of generating a sheet temperature prediction model through machine learning using the plurality of pieces of learning data generated in the learning data acquisition step,
the sheet temperature prediction model being adapted to receive, as input data, operation data, an attribute parameter related to the dimensions of the steel strip, an attribute parameter related to a component composition of the steel strip, and an attribute parameter related to a shape of the steel strip, and provide, as output data, a sheet temperature of the steel strip on the outlet side of the soaking zone.

7. The method for generating the steel strip sheet temperature prediction model according to claim 6, wherein
a method selected from among a neural network, decision tree learning, random forests, and support vector regression is used for the machine learning.
